(19) Europäisches Patentamt
European Patent Office
Office européen des brevets

(11) Veröffentlichungsnummer: **0 403 848 A2**

(12) **EUROPÄISCHE PATENTANMELDUNG**

(21) Anmeldenummer: **90110352.3**

(22) Anmeldetag: **31.05.90**

(51) Int. Cl.5: **C08G 77/60, C04B 35/56, C08J 3/12**

(30) Priorität: **01.06.89 DE 3917898**

(43) Veröffentlichungstag der Anmeldung: **27.12.90 Patentblatt 90/52**

(84) Benannte Vertragsstaaten: **DE FR GB IT**

(71) Anmelder: **WACKER-CHEMIE GMBH**
**Prinzregentenstrasse 22**
**D-8000 München 22(DE)**

(72) Erfinder: **Pachaly, Bernd, Dr. Dipl.-Chem.**
**Robert-Koch-Strasse 167**
**D-8263 Burghausen(DE)**

(54) **Verfahren zur Herstellung vom sphärischem, monodispersen Organopolysiloxan oder Siliciumoxycarbid.**

(57) Gegenstand der Erfindung ist ein Verfahren zur Herstellung von sphärischem, monodispersen Organopolysiloxan, das dadurch gekennzeichnet ist, daß Alkoxysilan der allgemeinen Formel

$$(R'O)_2\underset{CH_3}{Si} - \underset{CH_3}{Si}(OR')_2 \text{ ,}$$

worin R′ jeweils unabhängig voneinander Methyl-, Ethyl-, n-Propyl-, iso-Propyl-, n-Butyl-, sek.-Butyl- oder tert.-Butylrest sein kann, mit Wasser bei einem molaren Verhältnis Wasser zu Alkoxysilan von 40 Mol : 1 Mol bis 80 Mol : 1 Mol umgesetzt wird, sowie die Umsetzung dieser Organopolysiloxane zu sphärischem, monodispersen Siliciumoxycarbid.

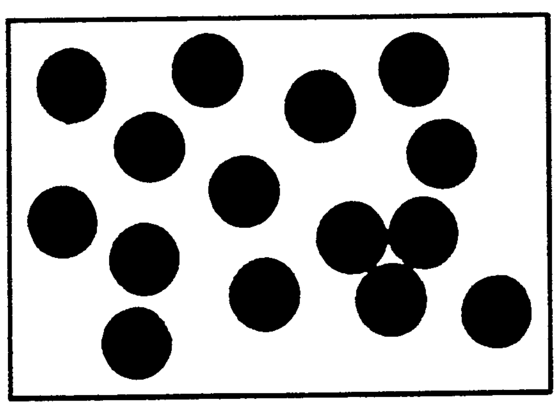

Fig. 4

EP 0 403 848 A2

## Verfahren zur Herstellung von sphärischem, monodispersen Organopolysiloxan oder Siliciumoxycarbid

In der EP-A-107943 sind kohlenstoffhaltige monolithische Gläser beschrieben, die aus Gelen von Organosilsesquioxanen der allgemeinen Formel $RSiO_{3/2}$ erhalten wurden. Die EP-A-298469 beschreibt die Herstellung hochporöser Körper aus Methylalkoxydisilanen. Aus der EP-A-298470 sind Siliciumoxycarbidpulver hergestellt aus Methylkieselsäure bekannt.

Aufgabe der Erfindung war die Herstellung von feinteiligem Organopolysiloxan oder Siliciumoxycarbid mit enger Partikeldurchmesserverteilung und sphärischer Partikelform ausgehend von Methylalkoxydisilanen.

Sphärisch im Sinne der Erfindung bedeutet, daß die Partikel eine Kugelform aufweisen.

Monodispers im Sinne der Erfindung bedeutet, daß die Partikel eine enge Partikeldurchmesserverteilung aufweisen, daß heißt die Durchmesser der einzelnen Partikel streuen kaum um einen Mittelwert.

Ein Gegenstand der Erfindung ist ein Verfahren zur Herstellung von sphärischem, monodispersen Organopolysiloxan, das dadurch gekennzeichnet ist, daß Alkoxysilan der allgemeinen Formel

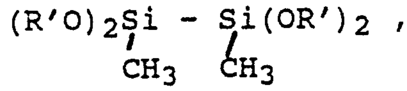

worin R′ jeweils unabhängig voneinander Methyl-, Ethyl-, n-Propyl-, iso-Propyl-, n-Butyl-, sek.-Butyl- oder tert.-Butylrest sein kann, mit Wasser bei einem molaren Verhältnis Wasser zu Alkoxysilan von 40 Mol : 1 Mol bis 80 Mol : 1 Mol umgesetzt wird.

Falls gewünscht kann Alkoxysilan der allgemeinen Formel

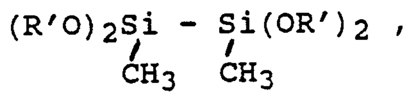

im Gemisch mit Alkoxysilan der allgemeinen Formeln

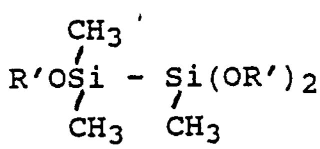 und/oder $RSi(OR')_3$ ,

worin R′ jeweils unabhängig voneinander Methyl-, Ethyl-, n-Propyl-, iso-Propyl-, n-Butyl-, sek.-Butyl- oder tert.-Butylrest und R Methyl-, Ethyl-, Propyl-, Vinyl- oder Phenylrest sein kann, eingesetzt werden.

Alkoxysilane der allgemeinen Formeln

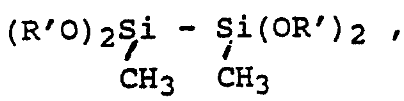

und

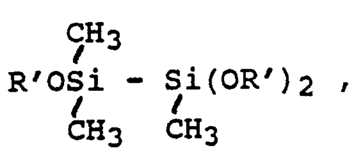

worin R′ die oben dafür angegebene Bedeutung hat, sind bekannte Verbindungen und nach Hengge et al., Monatshefte für Chemie, 105, 671-683 (1984) oder W.H. Atwell et al., Journal of Organometallic Chemistry, 7, 71-78 (1967) leicht zugänglich. Bevorzugte Alkoxysilane sind 1,2-Dimethyltetramethoxydisilan und 1,1,2-Trimethyltrimethoxydisilan.

Der erfindungsgemäße Sol-Gel-Prozess kann in Gegenwart eines Alkohols durchgeführt werden, wodurch der mittlere Partikeldurchmesser beeinflußbar wird. Bevorzugte Beispiele für eingesetzte Alkohole

sind Ethanol und Isopropanol, insbesondere Methanol.

Bevorzugte Parameter bei der Herstellung des Organopolysiloxans sind:
Zusammensetzung pro Mol Alkoxysilankomponente:
0-80 Mol, insbesondere 0-40 Mol, Alkohol und
40-80 Mol, insbesondere 40-50 Mol, Wasser.
Temperatur:
10-60 °C, insbesondere 20-30 °C.

Vorzugsweise wird nach dem Vermischen von Alkoxysilan, Wasser und gegebenenfalls Alkohol durch Zugabe von Base, wie wäßrigem Ammoniak, ein pH-Wert von 5,0 bis 9,0, vorzugsweise 6,0 bis 8,0 eingestellt. Nach dem Gelieren der Lösung wird das Siloxan-Pulver vorzugsweise durch Filtration oder Zentrifugation abgetrennt und bei vorzugsweise 20 - 150 °C, insbesondere 25 - 100 °C, unter Normaldruck oder Vakuum getrocknet.

Für die Herstellung der Organopolysiloxane entscheidend ist das Verhältnis Alkoxysilan zu Wasser beim Sol-Gel-Verfahren. Bei einem Molverhältnis von 6 Mol Wasser auf 1 Mol Alkoxysilan erhält man ein hochporöses Gel (siehe Fig.1). Durch Steigerung der Wassermenge bildet sich überraschend ein pulveriges Produkt, welches bei 8 Mol Wasser zu 1 Mol Alkoxysilan aber aus verwachsenen Partikeln besteht (siehe Fig.2). Bei 20 Mol Wasser zu 1 Mol Alkoxysilan finden sich noch immer zusammengewachsene Aggregate (siehe Fig.3), erst ab 40 Mol Wasser zu 1 Mol Alkoxysilan liegen isolierte, sphärische und monodisperse Partikel vor (siehe Fig.4).

Die Figuren 1 bis 4 zeigen somit folgende Verteilungen:

Fig.1: hochporöses Gel
Fig.2: verwachsene Partikel
Fig.3: zusammengewachsene Aggregate
Fig.4: sphärische, monodisperse Partikel

Gegenstand der Erfindung ist weiter sphärisches, monodisperses Organopolysiloxan bestehend aus Einheiten der Formel

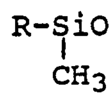 ,

wobei R ein über eine Silicium-Silicium-Einfachbindung gebundener Rest der Formeln

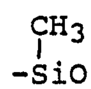 oder

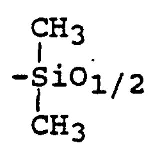

sein kann,
erhältlich durch Umsetzung von Alkoxysilan der allgemeinen Formel

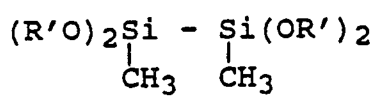 ,

worin R′ jeweils unabhängig voneinander Methyl-, Ethyl-, n-Propyl-, iso-Propyl-, n-Butyl-, sek.-Butyl- oder tert.-Butylrest sein kann, gegebenenfalls im Gemisch mit einem Alkoxysilan der allgemeinen Formel

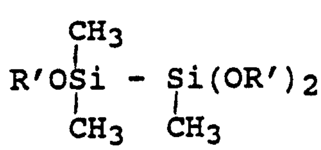 ,

worin R′ die oben dafür angegebene Bedeutung hat, mit Wasser gegebenenfalls in Gegenwart von Alkohol bei einem molaren Verhältnis Wasser zu Alkoxysilan von 40 Mol : 1 Mol bis 80 Mol : 1 Mol.

Bevorzugte sphärische, monodisperse Organopolysiloxane weisen mittlere Partikeldurchmesser von 1 - 5 µm, insbesondere 2 - 4 µm; spezifische Oberflächen nach BET von 1 - 4 $m^2/g$, insbesondere 1,5 - 3 $m^2/g$; Schüttdichten von 200 - 500 g/l, insbesondere 250 - 400 g/l; und Materialdichten von 1,0 - 1,4 $g/cm^3$, insbesondere 1,2 - 1,3 $g/cm^3$; auf.

Weiterhin von Bedeutung ist die Pyrolyse der Organopolysiloxane zu den entsprechenden Siliciumoxycarbiden.

Gegenstand der Erfindung ist somit weiter ein Verfahren zur Herstellung von sphärischem, monodispersen Siliciumoxycarbid, das dadurch gekennzeichnet ist, daß sphärisches, monodisperses Organopolysiloxan erhältlich durch Umsetzung von Alkoxysilan der allgemeinen Formel

$$(R'O)_2\underset{CH_3}{\underset{|}{Si}} - \underset{CH_3}{\underset{|}{Si}}(OR')_2 ,$$

worin R′ jeweils unabhängig voneinander Methyl-, Ethyl-, n-Propyl-, iso-Propyl-, n-Butyl-, sek.-Butyl- oder tert.-Butylrest sein kann, gegebenenfalls im Gemisch mit Alkoxysilan der allgemeinen Formeln

$$R'O\overset{CH_3}{\overset{|}{\underset{CH_3}{\underset{|}{Si}}}} - \underset{CH_3}{\underset{|}{Si}}(OR')_2 \text{ und/oder } RSi(OR')_3 ,$$

worin R′ die oben dafür gegebene Bedeutung hat und R Methyl-, Ethyl-, Propyl-, Vinyl- oder Phenylrest sein kann, mit Wasser gegebenenfalls in Gegenwart von Alkohol bei einem molaren Verhältnis Wasser zu Alkoxysilan von 40 Mol : 1 Mol bis 80 Mol : 1 Mol, unter nichtoxidierender Atmosphäre oder im Vakuum bei Temperaturen im Bereich von 700 bis 1500 °C umgesetzt wird.

Der bevorzugte Temperaturbereich ist innerhalb der Grenzen von 1000 bis 1300 °C.

Bei dieser Pyrolyse treten ein reproduzierbarer Volumenschrumpf von 15 bis 25 Volumenprozent und ein reproduzierbarer Gewichtsverlust von 10 bis 30 Gewichtsprozent auf. Die Umsetzung erfolgt unter nichtoxidierender Atmosphäre, das heißt unter inerter Atmosphäre wie Stickstoff oder Argon oder unter reduzierender Atmosphäre wie Kohlenmonoxid oder Wasserstoff, oder Formiergas oder im Vakuum diskontinuierlich vorzugsweise in Rohr- oder Kammeröfen oder kontinuierlich vorzugsweise in Durchlauföfen oder senkrecht angeordneten Rohröfen mit Austragsvorrichtung.

Durch Thermogravimetriemessung eines Organopolysiloxans unter Helium kann gezeigt werden, daß der chemische Umwandlungsprozeß bei 800 °C abgeschlossen ist. Bei höherer Temperatur finden morphologische Veränderungen statt, die auf die mechanischen und chemischen Eigenschaften Einfluß haben. Die erhaltenen Siliciumoxycarbide entsprechen der allgemeinen Zusammensetzung $C_aSiO_b$, wobei je nach eingesetztem Alkoxysilan, Reaktionsparametern und Pyrolysebedingungen a = 0,5 bis 1,2 und b = 0,75 bis 1,1 sein können. Spezifische Oberflächen und Schüttdichten hängen vom mittleren Partikeldurchmesser ab.

Bevorzugte sphärische, monodisperse Siliciumoxycarbide weisen mittlere Partikeldurchmesser von 1 - 4 µm, insbesondere 2 -3,5 µm; spezifische Oberflächen nach BET von 1 - 5 $m^2/g$, insbesondere 2 - 3,5 $m^2/g$; Schüttdichten von 300 - 700 g/l, insbesondere 400 - 600 g/l; und Materialdichten von 1,9 - 2,3 $g/cm^3$, insbesondere 2,2 - 2,3 $g/cm^3$; auf.

Anwendung finden Siliciumoxycarbide als Rohstoffe für pulvertechnologisch erzeugte keramische Materialien, als Füllstoffe für keramische Beschichtungen und Kleber, als Läpp- und Poliermittel, als Trager für Ionenaustauscher, Katalysatoren oder Biokatalysatoren nach der Oberflächenmodifizierung mit funktionellen Silanen und in der Chromatographie, z.B. als in-line-Filter.

Beispiel 1-7:

Aus 1,2-Dimethyltetramethoxydisilan, vollentsalztem Wasser und Methanol hergestellte Gemische der nachfolgenden Zusammensetzungen wurden nach 30 Minuten Rührzeit bei 20 °C mit konzentrierter Ammoniak-Lösung versetzt, bis der Anfangs-pH-Wert von 4,5 auf den pH-Wert von 7 eingestellt war. Nach einigen Minuten bildete sich ein Organopolysiloxangel, das durch Zentrifugation bei 4000 U/min und

Trooknung bei 25 °C aufgearbeitet wurde.

| Beispiel | Mol Disilan | Mol Wasser | Mol Methanol | Reaktionsprodukt |
|---|---|---|---|---|
| 1 | 0,1 | 0,4 | 0,4 | dichtes Gel |
| 2 | 0,1 | 0,6 | 0,4 | poröses Gel |
| 3 | 0.1 | 0,8 | 0,4 | pulveriges Gel |
| 4 | 0,1 | 1,2 | 0,4 | agglomeriertes Pulver |
| 5 | 0,1 | 2,0 | 0,4 | agglomeriertes Pulver |
| 6 | 0,1 | 3,2 | 0,4 | agglomeriertes Pulver |
| 7 | 0,1 | 4,0 | 0,4 | sphärisches, monodisperses Pulver |

Beispiel 8-13

Analog Beispiel 1 bis 7 wurden Gemische der nachfolgenden Zusammensetzungen umgesetzt und der Partikeldurchmesser im feuchten Produkt im Lichtmikroskop gemessen.

| Beispiel | Mol Disilan | Mol Wasser | Mol Methanol | mittlerer Partikeldurchmesser [μm] |
|---|---|---|---|---|
| 8 | 0,1 | 4,0 | 0 | 3,5 |
| 9 | 0,1 | 4,0 | 0,8 | 3,0 |
| 10 | 0.1 | 4,0 | 1,6 | 2,5 |
| 11 | 0,1 | 4,0 | 2,4 | 2,0 |
| 12 | 0,1 | 4,0 | 3,2 | 1,5 |
| 13 | 0,1 | 4,0 | 4,0 | 1,0 |

Beispiel 14

Ein gemäß Beispiel 11 hergestelltes Organopolysiloxan wurde durch Zentrifugieren bei 4000 U/min von der Flüssigkeit getrennt und bei 25 °C getrocknet. Aus 21,0 g 1,2-Dimethyltetramethoxydisilan wurden 11,0 g Pulver erhalten. Dieses Pulver wurde in einem mit Argon gespülten Rohrofen mit 140 °C/h auf 1300 °C aufgeheizt und 5 h bei dieser Temperatur belassen. Es wurden 9,9 g eines schwarzen Siliciumoxycarbids mit einer Schuttdichte von 570 g/l und einer spezifischen Oberfläche nach BET von 1,5 $m^2/g$ erhalten. Die chemische Zusammensetzung betrug 17,1 Gew.-% Kohlenstoff, 50,7 Gew.-% Silicium und 32,3 Gew.-% Sauerstoff. Der mittlere Partikeldurchmesser betrug 2 μm.

Beispiel 15

Ein gemäß Beispiel 14 aus 26,6 g 1,2 Dimethyltetraethoxydisilan hergestelltes Siliciumoxycarbid wies einen mittleren Partikeldurchmesser von 1 μm mit einer Schüttdichte vom 470 g/l und einer BET-Oberfläche von 3,0 $m^2/g$ auf. Die chemische Zusammensetzung betrug 17,2 Gew.-% Kohlenstoff, 50,7 Gew.-% Silicium und 32,1 Gew.-% Sauerstoff.

Beispiel 16

Ein gemäß Beispiel 8 hergestelltes Organopolysiloxan zeigte folgende Partikeldurchmesserverteilungs-

parameter:
$d_{10}$ = 3,0 µm
$d_{50}$ = 3,4 µm
$d_{90}$ = 3,8 µm

Nach Pyrolyse in einem mit Argon gespülten Rohrofen bei 1200 °C wurde ein Siliciumoxycarbid mit folgenden Partikeldurchmesserverteilungsparametern erhalten:
$d_{10}$ = 2,6 µm
$d_{50}$ = 2,9 µm
$d_{90}$ = 3,2 µm

## Ansprüche

1. Verfahren zur Herstellung von sphärischem, monodispersen Organopolysiloxan, dadurch gekennzeichnet, daß Alkoxysilan der allgemeinen Formel

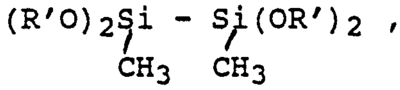

worin R′ jeweils unabhängig voneinander Methyl-, Ethyl-, n-Propyl-, iso-Propyl-, n-Butyl-, sek.-Butyl- oder tert.-Butylrest sein kann, mit Wasser bei einem molaren Verhaltnis Wasser zu Alkoxysilan von 40 Mol : 1 Mol bis 80 Mol : 1 Mol umgesetzt wird.

2. Verfahren nach Anspruch 1, dadurch gekennzeichnet, daß Alkoxysilan der allgemeinen Formel

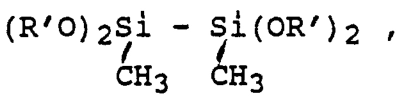

im Gemisch mit Alkoxysilan der allgemeinen Formeln

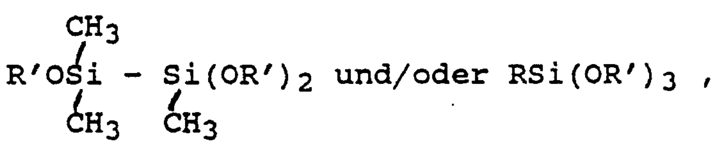

worin R′ jeweils unabhängig voneinander Methyl-, Ethyl-, n-Propyl-, iso-Propyl-, n-Butyl-, sek.-Butyl- oder tert.-Butylrest und R Methyl-, Ethyl-, Propyl-, Vinyl-oder Phenylrest sein kann, eingesetzt wird.

3. Verfahren nach Anspruch 1 oder 2, dadurch gekennzeichnet, daß 1,2-Dimethyltetramethoxydisilan oder ein Gemisch von 1,2-Dimethyltetramethoxydisilan und 1,1,2-Trimethyltrimethoxydisilan eingesetzt wird.

4. Verfahren nach einem oder mehreren der Ansprüche 1-3, dadurch gekennzeichnet, daß die Umsetzung in Gegenwart eines Alkohols durchgeführt wird.

5. Verfahren nach Anspruch 4, dadurch gekennzeichnet, daß die Umsetzung in Gegenwart von Methanol durchgeführt wird.

6. Verfahren nach einem oder mehreren der Ansprüche 1-5, dadurch gekennzeichnet, daß pro Mol Alkoxysilankomponent 0-80 Mol Alkohol und 40-80 Mol Wasser eingesetzt werden.

7. Verfahren nach einem oder mehreren der Ansprüche 1-6, dadurch gekennzeichnet, daß nach dem Vermischen von Alkoxysilan, Wasser und gegebenenfalls Alkohol durch Zugabe von Base ein pH-Wert von 5 bis 9 eingestellt wird.

8. Verfahren nach einem oder mehreren der Ansprüche 1-7, dadurch gekennzeichnet, daß die Umsetzung bei 10-60 °C erfolgt.

9. Sphärisches, monodisperses Organopolysiloxan bestehend aus Einheiten der Formel

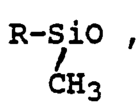

wobei R ein über eine Silicium-Silicium-Einfachbindung gebundener Rest der Formeln

$$-\overset{\displaystyle CH_3}{\overset{|}{Si}}O \text{ oder}$$

$$-\overset{\displaystyle CH_3}{\overset{|}{\underset{\displaystyle CH_3}{\underset{|}{Si}}}}O_{1/2}$$

sein kann,
erhältlich nach einem Verfahren gemäß einem der Ansprüche 1 bis 8.

10. Verfahren zur Herstellung von sphärischem, monodispersen Siliciumoxycarbid, das dadurch gekennzeichnet ist, daß sphärisches, monodisperses Organopolysiloxan erhältlich nach einem Verfahren gemäß einem der Ansprüche 1 bis 8 unter nichtoxidierender Atmosphäre oder im Vakuum bei Temperaturen im Bereich von 700 bis 1500 °C umgesetzt wird.

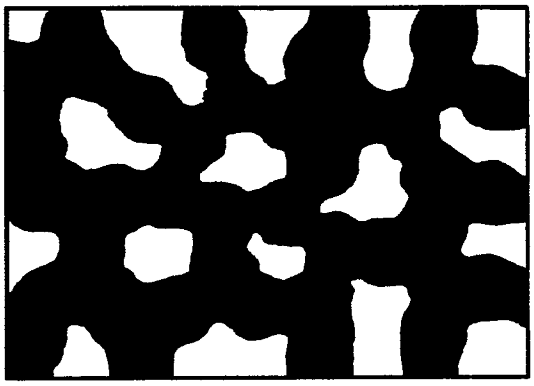

Fig. 1

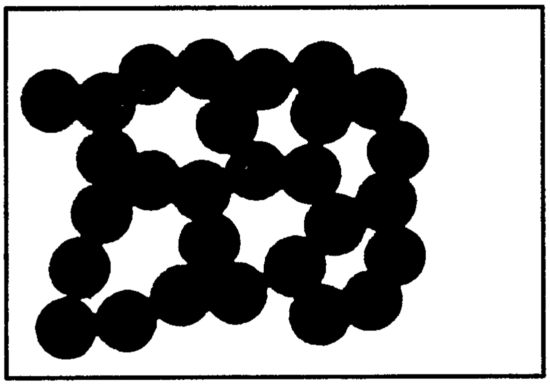

Fig. 2

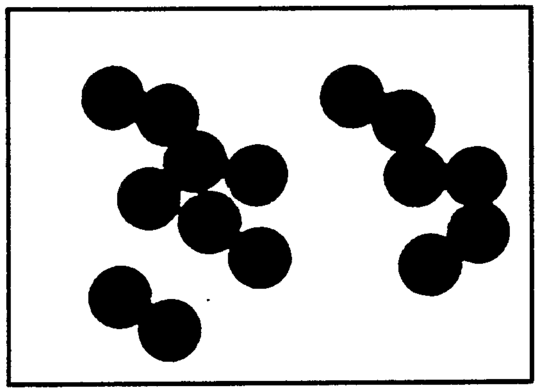

Fig. 3

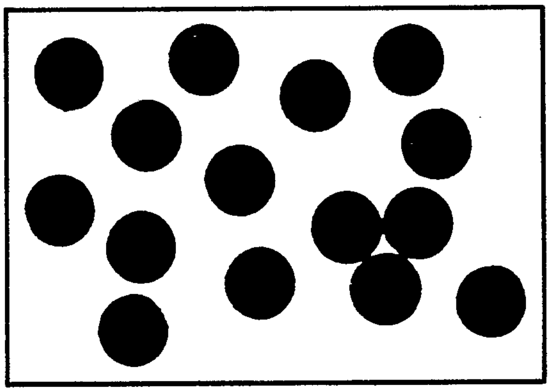

Fig. 4